Europäisches Patentamt

European Patent Office

Office européen des brevets

(11) Publication number: **0 249 536**
**A2**

# EUROPEAN PATENT APPLICATION

(21) Application number: **87401249.5**

(22) Date of filing: **04.06.87**

(51) Int. Cl.³: **B 60 T 11/12**

(30) Priority: **05.06.86 US 870882**

(43) Date of publication of application:
**16.12.87 Bulletin 87/51**

(84) Designated Contracting States:
**DE FR**

(71) Applicant: **Russell, Carl D.**
**30 Ramm's Court**
**Sallisaw Oklahoma 74955(US)**

(72) Inventor: **Russell, Carl D.**
**30 Ramm's Court**
**Sallisaw Oklahoma 74955(US)**

(74) Representative: **Lemoine, Michel et al,**
**Cabinet Michel Lemoine et Bernasconi 13 Boulevard des Batignolles**
**F-75008 Paris(FR)**

(54) Method and apparatus for changing a mechanical force to a larger hydraulic force.

(57) An apparatus providing a method for applying manual forces in one movement to initiate mechanical forces which are increased by manually activated hydraulic forces in providing a booster to the master cylinder needed in automotive braking.

METHOD AND APPARATUS FOR CHANGING A MECHANICAL FORCE TO
A LARGER HYDRAULIC FORCE.


FIELD OF THE INVENTION.

The invention replaces power boosters where excessive power is needed.

BRIEF SUMMARY OF THE INVENTION.

A new and useful apparatus incorporating a method in gaining a high volume movement of working fluids and increasing the pressure thereof. A combination of two forces in a mechanical and hydraulic apparatus applicable in one motion affected by a supply, entrapment, releasing and adding of fluids to gain movement of fluid and increase the pressure of such fluids providing a working force suitable for the automotive and industrial fields.

The first interval is the mechanical actuation for gaining the large advantage of piston movement, bringing the working portion together in placement with a lesser force by manually forwarding a piston and to provide fluids to fill the open spaces of displacement behind the piston in the cylinder through a one-way fluid valve passage from the fluid reservoir which will trap and retain the fluid gained by the greater amount of travel of the piston, holding the piston in such position as high pressure fluids are released and the plunger hydraulically injects fluids into the retained fluids of the expanded cylinder to compound the forces of the piston with pressure.

To provide credibility and merit of the invention in the automotive and industrial fields, herein will be described the construction, operation of one such application and the use thereof.

The objects to be accomplished by the use of the invention in the automobile are herein stated.

1. The first object of the invention is to enhance safety.

2. The second object is to eliminate the need for any foreign actuator to aid the braking process.

3. The third object is to reduce the cost of the braking system.

4. The fourth object is the provision of a compact apparatus having no external high pressure fluid lines.

5. The fifth object is simplicity of construction.

The invention will be further described in detail in connection with illustration, number and writing of the preferred embodiment as shown in drawing herein.

DETAILED DESCRIPTION OF THE DRAWING.

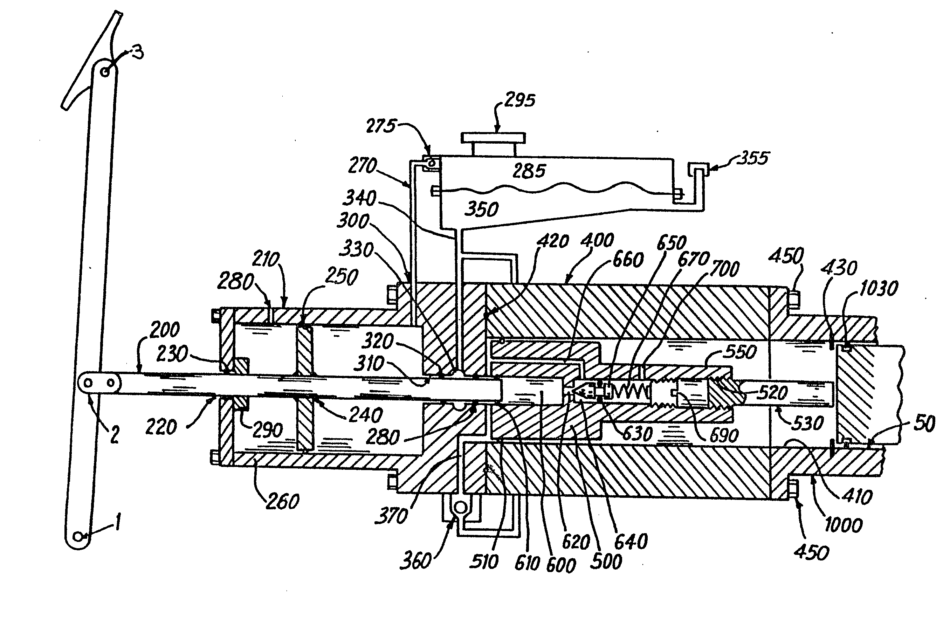

FIGURE 1 Is a split view of the entire invention in working position with numerals to coincide with writings, construction and operation.

DESCRIPTION OF A PREFERRED EMBODIMENT.

A description of the preferred construction of the invention for powering a brake master cylinder, in a motor vehicle equipped with the conventional foot brake pedal ensues. The conventional foot pedal (Not Shown) is pivotally connected to a plunger 200 finished for sliding. The plunger may be three-eighths (3/8) of an inch in diameter, five and three-fourths (5 3/4) inches long, of rigid material suitable to withstand the heat, pressures and working fluids of the braking system.

A housing 210 with preferably one and one-half (1 1/2) inch outer diameter, two and one-half (2 1/2) inches long of hard material suitable to withstand the heat of the braking system is secured concentrically to the center plate 300 which has a three-eighths (3/8) of an inch outer end center bore 310 for sliding and guiding plunger 200. The plunger 200 which carries a one (1) inch air pump piston 240 fitted with an O-ring 250 for sealing and sliding in the formed finished cylinder 260. The cylinder 260 is in communication with an air passage 270, extending to a flexible air chamber 285 provided with five (5) p.s.i. regulator cap 295.

The opposite end of cylinder 240 has an inlet air passage 280 and a piston stop 290. A cylindrical center plate 300, approximately two and one-half (2 1/2) inches in diameter and five-eighths (5/8) of an inch wall thickness of material suitable to withstand fluids, temperatures and pressure of the brake system has the finished center bore 310 fitted for allowing sliding of the plunger 200 freely. An O-ring 320 is seated in the outside end of bore 310 allowing sealing and sliding of the plunger 200, which will not be withdrawn from O-ring 320, as this holds the working fluids in the invention.

A three-sixteenths (3/16) inch fluid passage 340 extends out through the periphery of the end plate 300 to a reservoir 350, which holds about one (1) pint of working fluids. Passage 340 also extends (behind housing 400) to a one-way fluid valved passage 360, which is provided with a three-sixteenth (3/16) inch fluid passage 370 into the periphery of the end plate 300 to a depth about six hundred and twenty-five thousandths of an inch and turns a right angle passage to open on the inner side of the end plate 300. The end plate bore 310 inner end is provided with another O-ring 380, also fitted for sealing and sliding of

0249536

plunger 200.

The housing 400 is preferably two and one-half (2 1/2) inches in diameter and three and three-fourths (3 3/4) inches long of materials, e.g. aluminum, suitable to withstand fluids, temperature and pressure of the brake system, and is secured, as by three to six (3 to 6) bolts and sealed by O-ring 420 concentrically to the center plate 300. Housing 400 is provided with a center bore, forming a cylinder 410, approximately one and one-eighth (1 1/8) inches in diameter. The length of the housing cylinder 410 is finished to receive a piston 500, one and one-fourth (1 1/4) inches in length fitted with O-ring 510 for sealing and sliding in cylinder 410. Piston 500 has an extended smaller portion 550 five-eighths (5/8) of an inch in diameter and one and a half (1 1/2) inches long.

The piston 500 is prepared with a center bore 600 finished to form a cylinder three-eighths (3/8) inch in diameter and one and one-quarter (1 1/4) inch deep in the piston. The outer end of center bore cylinder 600 is internally fitted with O-ring 610 to receive the three-eighths (3/8) inch plunger 200 for sealing and sliding.

In the opposite inner end of bore 600, a small center bore 620 (sixty-two and one-half thousandths of an inch in diameter) extends through thirty-secondths of an inch wall into one-quarter (1/4) inch diameter piston valve 650. The left end of valve 650 is provided with a 60-degree taper to insert and close the small center bore 620 and is fitted with O-ring 630 for sealing and sliding in bore 640. One-sixteenth (1/16) inch diameter fluid passage 660 extends from bore 640 to open into cylinder 410 through the front end of piston 500. A spring 670 in a three-eighths (3/8) of an inch threaded bore provides tension on valve 650. Bore 640 is provided with a vent 700 and a threaded tension adjustment screw plug 690, having a screw driver slot for spring tension adjustment. Bore 640 internal threads 520 are provided for attaching a rod 530 to piston 500 to actuate the conventional piston 1030 in master cylinder 1000.

OPERATION.

The invention is an apparatus for powering of an automobile braking system via the master cylinder without requiring a booster of foreign power source.

The left hand housing 210 is secured to the vehicle and the brake pedal is secured to the plunger 200 to form the prime mover in actuating the development of fluid working pressures. The plunger locked-in 200 is depicted in position to provide manual forces to the piston 500 via the liquid in center bore 600, using the foot pedal for forwarding the plunger 200 to increase pressure to fluids to apply force to the connected master cylinder 1000 of the braking system.

Normally, the plunger 200 is positioned to the left with piston 240 in abutment with stop 290, which prevents the plunger 200 from being withdrawn from O-ring 320. As the plunger 200 is powered to the right by the depressing of the foot pedal, which moves piston 240 to the right in cylinder 260, air is induced to move through passage 270 and check valve 275 to flexible air chamber 285 in top of reservoir 350. The reservoir is provided with air pressure relief cap 295 having a relief valve 297 set at five (5) p.s.i. which can be fitted with a pressure float switch 298 connected to a red warning light 299 to show a pressure drop, and possible brake failure condition.

Normally, the plunger is positioned to the left in bore 310, extending only into the O-ring 320 to form and maintain fluid seal in bore 310. The depressing of the foot pedal slides the plunger 200 in a forward path to the right in O-ring 320 through circular fluid passage 330 and then to O-ring 380. This now closes off fluid path 330 to the fluid reservoir 350 from cylinder 410, and as the plunger 200 enters into O-ring 610, the fluids in center bore 600 are trapped. The fluids are retained in bore 600 by the small opposite end bore 620, being closed by valve 640. Tension of spring 670, induced by adjustment screw 680 in thread 690, locks the fluids in the cylinder 600. The spring will hold up to nine hundred (900) p.s.i. providing a fluid abutment to prevent further movement of plunger 200 into the cylinder 600.

The spring 670 may be a thirty-three (33) pound tension spring, based on the following calculation:

one-sixteenth inch  1/16 DIA. = Surface Area of bore 620

$$\pi R^2 \qquad = \text{Surface Area}$$

.0030677 Square Inches = Cross Sectional Area.

The area of bore 620 is approximately 1/36 of the plunger 200 at 900 pounds per square inch pressure at plunger 200 area.

$900 \times .0030677 =$ twenty-five (25) pounds.

Further plunger movement forwards the piston 500 in the brake system to increase the pressure still further to position the brake shoes into solid contact with the brake disk or drums, clamping pressure of approximately one hundred (100) p.s.i. is achieved at the brake shoes.

Pressure effectiveness below that of the preset pressure release (spring 670) related to surface area of piston 500 is approximately one-ninth (1/9) of the pressure retained in bore of cylinder 600 or one hundred (100) p.s.i. manually clamping force.

As the piston 500 moved forward a distance equivalent to five (5) p.s.i. fluids from reservoir 350 moved through the one-way valve passage 360 so that the displacement within closed end of cylinder 410 is filled as piston 500 is moved to full forward travel of the mechanical movement and the one-way fluid-flow valve 360 traps and retains the fluids, holding the piston 500 at the end of mechanical forced travel.

As the brake pedal depression is increased, the plunger 200 is moved further forward overcoming the selected spring 670 tension to crack the valve 650 and to open bore 620 into larger bore 640 and passage 660 into the face opening of piston 500.

This causes an immediate increase in pressure in the left end of cylinder 410 valve 650 cracked to provide a release of fluid pressure in cylinder 410, allowing the pressure forces of approximately one hundred p.s.i. induced in the master cylinder piston 1030 to act upon (kickback) the piston 500 via rod 530 affecting the fluids in cylinder 410 behind the piston 500 bringing that pressure to approximately one hundred (100) p.s.i. and applying this pressure through passage 660 into cylinder 640, applying this said pressure to valve 650, further collapsing spring 670 and fully opening passage 620.

This allows the small plunger 200 to substantially increase high pressure obtainable by normal manual effort on the brake pedal to the piston 500 in applying clamping forces needed to slow or stop a moving vehicle to respond to all needs. Of course if enough pressure is applied to the brake pedal, the valve 650 will be fully opened by plunger 200 acting through the entrapped fluid in center bore 600.

At the time the brake pedal is released, the fluid passages 660, 640 and 620 are open as fluid pressures on valve 650 continue to collapse spring 670 providing an open passage 620.

This allows fluids to exhaust from cylinder 410 and the end of piston 500 as the plunger 200 is withdrawn, releasing the induced hydraulic pressures. As the plunger continues to be withdrawn as the foot pedal is released withdrawing the plunger 200 from cylinder 600 and O-ring 610 and O-ring 380, the fluids are allowed to return by circular passage 330 and passage 340, extending the fluids to the fluid reservoir 350 (via passage 340), allowing the collapsing of piston 500, releasing the piston 1030 of the master cylinder and the brakes returning to a

0249536

condition of five (5) p.s.i. fluids.

It may now be appreciated that the present invention does not require the vehicle engine to be operating nor does it require any additional pressure force, but is rather a self-contained mechanical-hydraulic power multiplier.

0249536

CLAIMS.

1. A method for changing mechanical force to a larger hydraulic force for substantially increasing the braking force applied to a vehicular master cylinder piston above normal braking force, characterized by:

manually applying an input brake pedal force against input means of a first diameter for pushing the master cylinder piston by means of a body of entrapped fluid coupling the input means and the master cylinder piston, and

releasing part of the entrapped fluid after a predetermined input force is reached to exert substantially increased pressure against the master cylinder by interposing substantially larger diameter surface means to receive the force exerted by the fluid for movement thereof and therewith moving the master cylinder.

2. The method of Claim 1 further characterized by the steps of:

introducing additional fluid from a pressurized source through an irreversible path to fill space displaced by movement of the of the larger diameter surface means thereby locking the surface means against return movement, and

producing further fluid pressure by force of the input means to the entrapped fluid to urge the master cylinder piston in a braking direction thereby substantially increasing the braking force.

3. The method of Claim 1 further characterized by the step of:

multiplying the braking force by a factor depending upon the ratio of the surface areas of the smaller diameter input means to the larger diameter surface means.

4. Apparatus for changing mechanical force to a larger hydraulic force for substantially increasing the braking force applied to a vehicular master cylinder piston above normal braking force, characterized by:

10

a mechanism for manually applying an input brake pedal force against input means of a first diameter for pushing the master cylinder piston by means of an intermediate body of entrapped fluid coupling the input means and the master cylinder piston,

structure for releasing part of the entrapped fluid after a predetermined input force is reached to exert substantially increasing pressure against the master cylinder by interposing substantially larger diameter surface to receive the force exerted by the released fluid for movement thereby, and

means coupling the surface means to move the master cylinder responsive to the released fluid.

5. Apparatus as defined in Claim 4 further characterized by:

booster means introducing additional fluid from a pressurized source through an irreversible path to fill space displaced by movement of the larger diameter surface means thereby locking the surface against return movement, and

structure producing further fluid pressure by force of the input means to the entrapped fluid to urge the master cylinder piston in a braking direction thereby substantially increasing the braking force manually exerted.

6. Apparatus as defined in Claim 4 further characterized in more detail by:

a first piston and cylinder of larger diameter,

rigid means extending from the first piston to the master cylinder piston for applying force thereto,

a fluid containing cylindrical compartment in said first piston having a smaller diameter than the first cylinder,

a manually operable braking plunger comprising a piston operable in the fluid containing compartment,

an inlet-outlet passageway in said compartment with a mating valve member resiliently biased to close the passageway,

means normally filling the compartment with low pressure fluid, and

means operable through a one way valve to permit fluid flow into the first cylinder,

whereby the braking plunger transmit manual braking force through the fluid in said compartment to move the first piston and the master cylinder by way of the rigid means until the manual force exceeds the bias of the mating valve member thereby to transmit the plunger force against the large diameter first piston to multiply the force on the master cylinder piston.

7. Apparatus as defined in claim 4 further characterized in more detail by:

a booster mechanism coupled between manual brake force producing means and the master cylinder piston incorporating said mechanism, said structure and means coupling the surface means.